# EUROPÄISCHE PATENTANMELDUNG

(11) **EP 4 125 040 A1**
(43) Veröffentlichungstag der Anmeldung: **01.02.2023**
(21) Anmeldenummer: 21187890.5
(22) Anmeldetag: 27.07.2021
(51) Int. Cl.: G06T 11/00

(54) **BESTIMMUNG VON OPTIMIERTEN MESSPOSITIONEN IN DER COMPUTERTOMOGRAPHIE**

(71) Anmelder: Siemens Aktiengesellschaft, 80333 München (DE)
(72) Erfinder: Bauer, Fabian, 81549 München (DE)

(57) **Zusammenfassung**

Die Erfindung betrifft ein Verfahren zum Bestimmen einer Vielzahl von optimierten Messpositionen MPOS eines Quelle-Detektor-Systems eines Computertomographen zur Erzeugung einer entsprechenden Vielzahl von Aufnahmen eines zu untersuchenden Objekts. Hierzu wird zunächst eine ursprüngliche Grundmenge umfassend eine Vielzahl von Projektionen des zu untersuchenden Objekts bereitgestellt, wobei verschiedene Projektionen Abbildungen des Abbildungsbereichs des Objekts entsprechen, welche von unterschiedlichen möglichen Positionen des Quelle-Detektor-Systems aufgenommen sind. Anschließend wird diejenige Menge GRP von Projektionen aus der ursprünglichen Grundmenge ausgewählt, für die ein Qualitätsindex optimiert ist. Die zu bestimmenden Messpositionen MPOS werden dann als diejenigen Positionen des Quelle-Detektor-Systems festgelegt, welche den Projektionen der ausgewählten Menge GRP von Projektionen zugeordnet sind.

## Beschreibung

Die Erfindung betrifft einen optimierten Ansatz zur Computertomographie. Insbesondere betrifft die Erfindung eine optimierte Trajektorie, entlang derer sich ein Quelle-Detektor-System eines Computertomographen zur Abbildung eines zu untersuchenden Objektes bewegt. Im Idealfall berücksichtigt die Optimierung die individuelle Geometrie des zu untersuchenden Objekts.

Grundsätzlich und vereinfacht weist ein Computertomograph (CT) ein Quelle-Detektor-System mit einer Röntgenquelle und einem Detektor auf, wobei Quelle und Detektor derart zueinander angeordnet sind, dass die von der Quelle zur Untersuchung aussendbare Röntgenstrahlung auf und typischerweise zumindest teilweise durch ein in einem Untersuchungsbereich (Field of View, FoV) des CT anzuordnendes, zu untersuchendes Objekt fällt. Die das Objekt durchquerende Reststrahlung fällt dann auf den Detektor und wird durch diesen nachgewiesen. Demzufolge sind Röntgenquelle und Detektor bezüglich des Untersuchungsbereiches FoV stets einander gegenüberliegend angeordnet.

Zur Untersuchung des Objekts wird typischerweise eine Vielzahl von Abbildungen bzw. Projektionen des Objekts erzeugt, wobei unterschiedliche Projektionen aus unterschiedlichen Richtungen erzeugt werden, d.h. mit unterschiedlichen Posen der Röntgenquelle bzw. des Detektors. Aus den Projektionen wird dann bspw. mit Hilfe der gefilterten Rückprojektion ein Bild des Objekts im Ortsraum rekonstruiert.

Die Positionen der Röntgenquelle und damit verbunden die Positionen des entsprechenden Detektors befinden sich zur Untersuchung des Objekts und zur Erzeugung der entsprechenden Projektionen auf einer bestimmten Trajektorie. Im einfachsten Fall kann die Trajektorie eine Kreisbahn sein, deren Mittelpunkt im Untersuchungsbereich FoV liegt und deren Achse bspw. horizontal ausgerichtet ist. Dabei umfasst die Trajektorie im Prinzip eine Vielzahl von Posen des Quelle-Detektor-Systems, wobei eine jeweilige Pose zum Einen die dreidimensionale Position des Quelle-Detektor-Systems auf der Trajektorie und zum Anderen die Ausrichtung des Quelle-Detektor-Systems bspw. anhand der Angabe eines entsprechenden Raumwinkels beschreibt. Dabei ist die Ausrichtung wie bereits erwähnt stets derart gewählt, dass die aussendbare Röntgenstrahlung auf ein im Untersuchungsbereich positioniertes Objekt fallen kann. Demzufolge hängt die Ausrichtung direkt und eindeutig von der Position von Quelle und Detektor ab und stellt keine freie Variable dar. Da die Ausrichtung von Quelle und Detektor zueinander wie ebenfalls bereits erwähnt derart gewählt sein muss, dass die ausgesendete Röntgenstrahlung auf den Detektor fällt, ist der Ausdruck "Pose des Quelle-Detektor-Systems" im Regelfall äquivalent zum Ausdruck "Pose der Röntgenquelle" und ebenso im Regelfall äquivalent zu "Pose des Detektors". Abweichungen hiervon könnten sich streng genommen dann ergeben, wenn der Abstand zwischen Quelle und Detektor bzw. zwischen Quelle und Drehpunkt oder zwischen Detektor und Drehpunkt nicht konstant ist und die Quelle die Relativausrichtung zum Detektor ggf. verändert. Dies ist in der Praxis jedoch üblicherweise nicht der Fall, weswegen diese Situation an dieser Stelle nicht weiter betrachtet wird, zumal es auf die eigentliche Erfindung keinen Einfluss hat. Noch weiter gehend ist der Ausdruck "Pose des Quelle-Detektor-Systems" äquivalent zu "Position des Quelle-Detektor-Systems", "Position der Röntgenquelle" und zu "Position des Detektors". Dementsprechend sind auch bspw. die Begriffe "Trajektorie des Quelle-Detektor-Systems" und "Trajektorie der Quelle" äquivalent zueinander. Mit all dem reicht es also aus, die Pose des Quelle-Detektor-Systems allein durch die Position der Quelle zu beschreiben, weil die Ausrichtung des Systems sowie die Position des Detektors direkt an die Position der Quelle gekoppelt sind. Im Folgenden beziehen sich die Begriffe "Pose" und "Position" daher der Einfachheit halber auf die Röntgenquelle, es ergeben sich daraus aber ohne weiteres die "Posen" und "Positionen" des Quelle-Detektor-Systems sowie des Detektors.

Die eingeführten Begriffe "Trajektorie" bzw. "Pose" etc. beschreiben demnach die Positionierung von Quelle und Detektor in Relation zum zu untersuchenden Objekt. Moderne Computertomographieanlagen für medizinische und insbesondere für industrielle Zwecke werden mit zunehmend mehr Freiheitsgraden bzw. Achsen ausgestattet, bspw. zu beobachten in der robotergestützten CT. Diese Erweiterung schlägt sich darin nieder, dass neue Arten von Trajektorien möglich werden, entlang derer das Quelle-Detektor-System des CT bewegt werden kann und auf denen die oben eingeführten Posen des Quelle-Detektor-Systems liegen.

Traditionell sind vor allem noch vergleichsweise einfache, kreis- oder helixförmige Trajektorien verbreitet. Eine Verbesserung versprechen insbesondere solche Trajektorien, bei denen sich die Quelle und der Detektor bspw. auf einer Kugeloberfläche um das zu untersuchende Objekt bewegen. Diese sind bspw. bei der robotergestützten Computertomographie realisierbar. Während die traditionellen Methoden hinsichtlich der räumlichen Auflösung in drei Dimensionen noch nicht optimiert sind, bedingt die Positionierung der Quelle an einer Vielzahl von Punkten auf einer Kugeloberfläche zwar eine insbesondere hinsichtlich der Homogenität verbesserte räumliche 3D-Auflösung, jedoch ist entweder die Messdauer wesentlich vergrößert oder die räumliche Auflösung ist zwar homogen, aber in Bezug auf das Messobjekt doch nicht ideal.

Es ist daher eine Aufgabe der vorliegenden Erfindung, eine verbesserte Möglichkeit anzugeben, in verkürzter Zeit ein räumlich hochaufgelöstes und weitestgehend artefaktfreies Bild eines Objekts zu erzeugen.

Diese Aufgabe wird durch das in Anspruch 1 beschriebene Verfahren sowie durch das in Anspruch 14 beschriebene System gelöst. Die Unteransprüche beschreiben vorteilhafte Ausgestaltungen.

In dem Verfahren zum Bestimmen einer Trajektorie umfassend eine einer Vielzahl NPOS von Messpositionen MPOS(a) mit a=1,...,NPOS eines Quelle-Detektor-Systems eines Computertomographen zur Erzeugung einer entsprechenden Vielzahl NPROJ=NPOS von Aufnahmen AUF(b) mit b=1,...,NPROJ eines zu untersuchenden Objekts mit dem Quelle-Detektor-System in einer jeweiligen solchen Messposition wird zunächst in einem Bereitstellungsschritt S INI eine ursprüngliche Grundmenge GRD(0) umfassend eine Vielzahl VP von Projektionen P(p) mit p=1,...,VP zumindest eines Abbildungsbereichs, der das ganze Objekt umfassen kann, des zu untersuchenden Objekts OBJ bereitgestellt. Die Projektionen P(p) können bspw. Abbildungen bzw. entsprechende 2D-Datensätze ggf. bereits im Fourierraum sein. Verschiedene Projektionen P(p1), P(p2) mit p1, p2=1,...,VP und p1≠p2 der Vielzahl von Projektionen P(p) entsprechen Abbildungen des Abbildungsbereichs des Objekts OBJ, welche von unterschiedlichen möglichen Positionen POS(p1), POS(p2) des Quelle-Detektor-Systems aufgenommen sind. Eine solche Projektion P(p) und eine solche Position POS(p) sind jeweils einander eindeutig zugeordnet. In einem Bewertungsschritt S_BEW wird nun diejenige Menge GRP von Projektionen aus der ursprünglichen Grundmenge GRD(0) ausgewählt, für die ein bestimmter Qualitätsindex Q(GRP) optimiert ist. Die zu bestimmenden Messpositionen MPOS(a) werden dann als diejenigen Positionen des Quelle-Detektor-Systems festgelegt, welche den Projektionen der aufgrund des optimalen Qualitätsindex ausgewählten Menge GRP von Projektionen zugeordnet sind bzw. aus denen die Projektionen der ausgewählten Gruppe aufgenommen wurden.

Dabei wird ausgenutzt, dass für die ursprüngliche Grundmenge GRD(0) jeweils eine Projektion aus der ursprünglichen Grundmenge GRD(0) und eine entsprechende Position des Quelle-Detektor-Systems einander eindeutig zugeordnet sind, so dass bei Auswahl einer bestimmten Projektion aus der ursprünglichen Grundmenge GRD(0) aufgrund der eindeutigen Zuordnung zueinander unmittelbar auch die entsprechende Position und Pose des Quelle-Detektor-Systems ausgewählt ist.

Das der Erfindung zu Grunde liegende Konzept baut u.a. darauf auf, dass die Bildgebung dadurch verbessert werden kann, dass die Trajektorie bzw. die Messpositionen letztlich in gewisser Abhängigkeit von der geometrischen Form des zu untersuchenden Objekts festgelegt werden kann. Durch so angepasste Trajektorien kann bei im Wesentlichen gleichbleibender Messdauer im Vergleich zu konventionellen, bspw. kreis- oder helixförmigen Trajektorien eine deutlich bessere Bildqualität erreicht werden. Bei Bedarf kann eine gewünschte Bildqualität mit einer geringeren Projektionsanzahl und damit geringerer Messdauer erreicht werden. Dies ermöglicht neue Applikationen wie bspw. das sogenannte Inline-CT zur Einzelteilprüfung, das die Messzeit soweit verkürzt werden kann, dass die Messung eines jeden einzelnen Teils einer Charge zeitlich vertretbar wird. Generell wird das Verfahren deutlich wirtschaftlicher und auch die Strahlenbelastung kann wesentlich gesenkt werden, was bspw. bei empfindlicher Elektronik relevant sein kann.

Die unterschiedlichen möglichen Positionen des Quelle-Detektor-Systems sind insbesondere gleichmäßig auf einer Kugeloberfläche verteilt.

Der Qualitätsindex Q wird zumindest aus einem Bildqualitätsindex QB und einem Fourier-Qualitätsindex QF berechnet, so dass gilt Q(GRP) = QB(GRP) o QF, wobei der Operator "oʺ insbesondere für eine Multiplikation steht.

Im Bewertungsschritt S_BEW zur Auswahl der Menge GRP von Projektionen wird eine Anzahl NTGRP von Teilgruppen TGRP(t) mit t=1,...,NTGRP jeweils umfassend eine oder mehrere Projektionen aus der ursprünglichen Grundmenge GRD(0) erzeugt, indem einer jeweiligen Teilgruppe TGRP(t) eine Anzahl N von Projektionen aus der ursprünglichen Grundmenge GRD(0) zugeordnet wird. Für jede Teilgruppe TRGP(t) wird dann ein Bildqualitätsindex QB(TRGP(t)) berechnet, indem jeweils aus den Projektionen der jeweiligen Teilgruppe TGRP(t) ein Bild B(t) rekonstruiert und für das rekonstruierte Bild B(t) eine Qualitätsmetrik bestimmt wird, die dann als Bildqualitätsindex QB(TGRP(t)) für die jeweilige Teilgruppe TGRP(t) angenommen wird. Desweiteren wird jeder Teilgruppe TRGP(t) basierend auf deren Projektionen P ein Fourier-Qualitätsindex QF(TRGP(t)) zugeordnet, der zumindest einem Fourier-Qualitätsindex QF(p) zumindest einer der Projektionen der jeweiligen Teilgruppe TRGP(t) entspricht. Schließlich wird diejenige Teilgruppe TGRP(t=opt) als Menge GRP ausgewählt, für die eine Kombination aus Bildqualitätsindex QB(TRGP(t)) und Fourier-Qualitätsindex QF(TRGP(t)) optimal ist.

Das beschriebene Verfahren ist insbesondere ein iteratives Verfahren. Der Bewertungsschritt S BEW zur Auswahl der Menge GRP umfasst eine oder mehrere Iterationen i mit i=1,...,I und 1≤I≤VP. In jeder Iteration i wird zunächst in einem Zuordnungsschritt ZU(i) eine Anzahl NTGRP(i) von Teilgruppen TGRP(i,t) mit t=1,...,NTGRP(i) erzeugt, jeweils umfassend eine oder mehrere Projektionen aus der ursprünglichen Grundmenge GRD(0), indem einer jeweiligen Teilgruppe TGRP(i,t) eine Anzahl N(i) von Projektionen aus der ursprünglichen Grundmenge GRD(0) zugeordnet wird. Für jede der Teilgruppen TGRP(i,t) wird der Qualitätsindex Q(TGRP(i,t)) bestimmt, bevor dann aus den Teilgruppen TGRP(i,t) diejenige Teilgruppe TGRP(i,t=opt) ausgewählt wird, für die der Qualitätsindex Q(TGRP(i,t=opt)) optimal bzw. bspw. am größten ist. Schließlich werden die Projektionen der in der letzten Iteration i=I ausgewählten Teilgruppe TGRP(i=I,t=opt) der Menge GRP zugeordnet.

Dabei wird in jeder Iteration i in einer ersten Qualitätsbewertung QUAL1(i) jeder Teilgruppe TGRP(i,t) ein Fourier-Qualitätsindex QF(TGRP(i,t)) zugeordnet und/oder in einer zweiten Qualitätsbewertung QUAL2(i) für jede Teilgruppe TGRP(i,t) ein Bildqualitätsindex QB(TGRP(i,t)) berechnet. Der Qualitätsindex Q(TGRP(i,t)) einer jeweiligen Teilgruppe TGRP(i,t) ist hierauf aufbauend abhängig von dem Bildqualitätsindex QB(TGRP(i,t)) und/oder dem Fourier-Qualitätsindex QF(TGRP(i,t)), wobei der Qualitätsindex Q(TGRP(i,t)) jeweils insbesondere durch Multiplikation des Bildqualitätsindex QB(TGRP(i,t)) und des Fourier-Qualitätsindex QF(TGRP(i,t)) gebildet wird.

Im Zuordnungsschritt ZU(i) erfolgt die Zuordnung von Projektionen aus der ursprünglichen Grundmenge GRD(0) zu einer jeweiligen Teilgruppe TGRP(i,t) in einer jeweiligen Iteration i derart, dass in der ersten Iteration für i=1 eine jede Teilgruppe TGRP(1,t) jeweils eine der Projektionen der ursprünglichen Grundmenge GRD(0) umfasst, d.h. NTGRP(1)=1, wobei unterschiedliche Teilgruppen unterschiedliche Projektionen der ursprünglichen Grundmenge GRD(0) umfassen. Danach umfasst in jeder weiteren Iteration i mit i>1 eine jeweilige Teilgruppe TGRP(i,t) zum Einen die Projektionen der im vorherigen Schritt i-1 ausgewählten Teilgruppe TGRP(i-1,t=opt), d.h. insofern sind die Teilgruppen identisch, und zusätzlich zum Anderen jeweils eine der Projektionen einer jeweiligen reduzierten Grundmenge GRD(i) von Projektionen, wobei unterschiedliche Teilgruppen TGRP(i,t1), TGRP(i,t2) unterschiedliche Projektionen der reduzierten Grundmenge GRD(i-1) umfassen. Dabei unterscheidet sich für eine jeweilige Iteration i die dort verwendete reduzierte Grundmenge GRD(i) von Projektionen von der ursprünglichen Grundmenge GRD(0) dadurch, dass die reduzierte Grundmenge GRD(i) die Projektionen der in der vorhergehenden Iteration i-1 ausgewählten Teilgruppe TGRP(i-1,t=opt) nicht enthält, während sie in der ursprünglichen Grundmenge GRD(0) noch enthalten sind. Für eine jeweilige Iteration i kann also die dort verwendete reduzierte Grundmenge GRD(i) von Projektionen bspw. dadurch gebildet werden, dass die Projektionen der in der vorhergehenden Iteration i-1 ausgewählten Teilgruppe TGRP(i-1,t=opt) jeweils aus der Grundmenge GRD(0) entfernt werden, so dass sie in der Iteration i nicht mehr zur Bildung von Teilgruppen zur Verfügung stehen. Konsequenterweise wird also quasi mit jeder Iteration eine Projektion aus der Grundmenge GRD(0) entfernt.

Der in der ersten Qualitätsbewertung QUAL1(i) einer jeweiligen Teilgruppe TRGP(i,t) zugeordnete Fourier-Qualitätsindex QF(TRGP(i,t)) entspricht zumindest einem Fourier-Qualitätsindex QF(px) zumindest einer der Projektionen P(px) der jeweiligen Teilgruppe TRGP(i,t). Dabei wird einer jeweiligen Teilgruppe TRGP(i,t) vorzugsweise derjenige Fourier-Qualitätsindex QF(TRGP(i,t)) zugeordnet, der dem Fourier-Qualitätsindex QF(pi) der dieser Teilgruppe TGRP(i,t) zuletzt, d.h. in der Iteration i, aus der jeweiligen reduzierten Grundmenge GRD(i) zugeordneten Projektion P(pi) entspricht.

Hierzu kann der Fourier-Qualitätsindex QF(p) einer jeweiligen Projektion P(p) einer Datenbasis FGMAP entnommen werden, welche, insbesondere vor der Ausführung des Bewertungsschrittes S_BEW, erzeugt wird, indem zunächst anhand der Vielzahl von Projektionen P(p) der ursprünglichen Grundmenge GRD(0) ein dreidimensionaler Fourier-Datensatz im Fourierraum generiert wird. Für jede der Projektionen P(p) der ursprünglichen Grundmenge GRD(0) werden im Wesentlichen entlang einer Richtung Rp, die der jeweiligen Projektion P(p) entspricht, im Fourier-Datensatz und durch dessen Ursprung die dortigen Werte, insbesondere die Fourierkoeffizienten, zu einem jeweiligen Fourier-Gesamtwert FG(p) aufaddiert. Dabei sei angemerkt, dass die Richtung Rp im Fourierraum senkrecht auf der Richtung steht, die im Ortsraum zur Aufnahme der jeweiligen Projektion P(p) angewendet wurde. D.h. aus der Richtung Rp im Fourierraum folgt wiederum unter Beachtung dessen, dass die Projektionsrichtung im Ortsraum senkrecht auf der entsprechenden Richtung Rp im Fourierraum steht, die Richtung der zugehörigen Projektion im Ortsraum. Dabei meint der Ausdruck "Richtung der Projektion" bzw. "Projektionsrichtung" im Ortsraum die Richtung von der Quelle des Quelle-Detektor-Systems zum Detektor zur Aufnahme der Projektion P(p). Dies soll also durch den Ausdruck "entlang einer Richtung, die der jeweiligen Projektion P(p) entspricht" abgedeckt sein. Ein jeweiliger so ermittelter Fourier-Gesamtwert FG(p) der entsprechenden Projektion P(p) repräsentiert den Fourier-Qualitätsindex QF(p)=FG(p) dieser Projektion P(p) und wird dieser Projektion P(p) zugeordnet, so dass die Datenbasis FGMAP schließlich sämtliche so erzeugten Fourier-Qualitätsindizes QF(p) für sämtliche Projektionen P(p) der ursprünglichen Grundmenge GRD(0) umfasst.

Hierdurch werden die Richtungen bzw. Projektionen mit den höchsten Fourierkoeffizienten identifiziert, welche dann die besten Kandidaten zur Auswahl für die Teilgruppen darstellen. Damit wird sichergestellt, dass die ausgewählte Teilgruppe Projektionen umfasst, die die Details des abzubildenden Gegenstands am besten erfassen.

Hierbei können in der Iteration i die Fourier-Qualitätsindizes QF(p') von Projektionen P(p') in der Datenbasis FGMAP, welche benachbart zu derjenigen Projektion P(pi) liegen, die in dieser Iteration i der Teilgruppe TGRP(i,t) zugeordnet wurde, mit einem Wichtungsfaktor W<1 multipliziert werden. Hierdurch wird im Laufe des Verfahrens eine räumlich homogenere Auswahl von Projektionen aus der Datenbasis FGMAP und damit konsequenterweise eine weitestgehend gleichverteilte Positionierung des Quelle-Detektor-Systems für die einzelnen Aufnahmen erreicht, was sich am Ende bei der realen Bildgebung des Objekts darin niederschlägt, dass das dann erzeugte Bild aufgrund der besseren Homogenität der Aufnahmerichtungen weniger artefaktbelastet ist. Mit aufgrund der Wichtung W<1 reduziertem Fourier-Qualitätsindex QF(p') kann erreicht werden, dass in einer folgenden Iteration i'>i gerade nicht der Fourier-Qualitätsindex QF(p') einer in der Nachbarschaft der früher ausgewählten Projektion P(p) liegenden Projektion der beste Fourier-Qualitätsindex QF(p') ist, sondern dass eine entfernt von der früher ausgewählten Projektion P(p) liegende Projektion P(p2) den besten Fourier-Qualitätsindex QF(p2) aufweist, so dass schließlich diese Projektion P(p2) zur Zuordnung zur Teilgruppe TRGP(i,t) ausgewählt wird. In diesem Zusammenhang bezieht sich der Begriff "benachbart" zu einer Projektion P insbesondere auf die Richtung dieser Projektion im Orts- sowie auch dementsprechend im Fourierraum. Bspw. können diejenigen Projektionen als "banachbart" zu einer ersten Projektion gelten, die sich innerhalb eines geraden Kreiskegels befinden, dessen Spitze im Ursprung des Ortsraums liegt, dessen Symmetrieachse durch die Richtung der ersten Projektion gebildet wird und der einen vorgegebenen Öffnungswinkel von bspw. 3° aufweist. Die denjenigen Projektionen zugeordneten Fourier-Qualitätsindizes QF(p'), die innerhalb dieses Kegels liegen, können bspw. mit einem Faktor W=0,5 multipliziert werden.

In der zweiten Qualitätsbewertung QUAL2(i) wird zur Berechnung des jeweiligen Bildqualitätsindex QB(TRGP(i,t)) für eine jeweilige Teilgruppe TRGP(i,t) jeweils aus den Projektionen dieser Teilgruppe TGRP(i,t) ein zwei- oder dreidimensionales Bild B(i,t) typischerweise im Ortsraum rekonstruiert wird und für das jeweilige rekonstruierte Bild B(i,t) eine Qualitätsmetrik bestimmt, die dann den Bildqualitätsindex QB(TGRP(i,t)) für die jeweilige Teilgruppe TGRP(i,t) repräsentiert. Die Bestimmung der Qualitätsmetrik kann anhand an sich bekannter Ansätze erfolgen, indem das rekonstruierte Bild bspw. entweder direkt evaluiert wird, bspw. mittels einer referenzlosen, rauschquantifizierenden Metrik wie der Shannon-Entropie oder dem Gini-Koeffizienten, oder durch Vergleich mit einem Referenzvolumen, bspw. unter Zuhilfenahme eines RMSE-Verfahrens (Root-Mean-Square Error) oder eines SSIM-Ansatzes (Structural Similarity Index). Auch lokale Point-Spread-Functions können zu diesem Zweck eingesetzt werden.

Die Projektionen der Grundmenge GRD(0) können bspw. simulierte Projektionen von einem das zu untersuchende Objekt repräsentierenden simulierten Gegenstand sein, bspw. basierend auf einem CAD-Datensatz des zu untersuchenden Objekts.

Vorzugsweise umfasst der Abbildungsbereich nicht das ganze Objekt OBJ, sondern lediglich einen Teilbereich OBJ AUS des Objekts OBJ, in dem sich bspw. eine bestimmte, besonders interessante oder relevante Struktur des Objekts OBJ befindet.

In dem Fall ist der Abbildungsbereich kleiner als das Field of View des CT-Systems,

Da konsequenterweise der Datenumfang in GRD(0) aufgrund der Fokussierung auf den kleineren Abbildungsbereich OBJ_AUS gegenüber OBJ wesentlich reduziert sein kann, ist das beschriebene Verfahren deutlich schneller abarbeitbar. Desweiteren verspricht die Fokussierung auf den Abbildungsbereich OBJ_AUS und die darin liegende interessierende Struktur, dass die Bildgebung mit den optimalen Positionen gerade diese Struktur optimal abbildet. Zum Einen erfordert der Bewertungsschritt S_BEW aufgrund der reduzierten Größe einen geringeren Zeitaufwand, weil bspw. die dort anstehenden Fourierberechnungen einen kleineren Raumbereich umfassen und dementsprechend schneller sind. Desweiteren bewirkt die Fokussierung des Abbildungsbereichs auf die bestimmte Struktur, dass sich die Ermittlung der optimalen Positionen noch stärker an eben dieser Struktur orientiert, so dass die Bestimmung der Messpositionen die Eigenschaften des Objekts bspw. hinsichtlich Geometrie und innerem Aufbau berücksichtigt.

Ein entsprechendes Computertomographiesystem zur Untersuchung eines Objekts OBJ umfasst ein bspw. durch einen Roboterarm bewegliches Quelle-Detektor-System sowie eine Steuereinheit. Das Quelle-Detektor-System ist ausgebildet, aus einer Vielzahl NPOS von Positionen POS(a) Aufnahmen AUF(b) des zu untersuchenden Objekts OBJ zu erzeugen. Die Steuereinheit ist eingerichtet, das oben beschriebene Verfahren auszuführen, um die Vielzahl NPOS von Messpositionen POS(a) zur Untersuchung des Objekts OBJ zu bestimmen. Des Weiteren kann die Steuereinheit eingerichtet sein, den Roboterarm derart zu bewegen, dass das Quelle-Detektor-System in die Messpositionen gebracht werden kann.

Weitere Vorteile und Ausführungsformen ergeben sich aus den Zeichnungen und der entsprechenden Beschreibung.

Im Folgenden werden die Erfindung und beispielhafte Ausführungsformen anhand von Zeichnungen näher erläutert. Dort werden gleiche Komponenten in verschiedenen Figuren durch gleiche Bezugszeichen gekennzeichnet. Es ist daher möglich, dass sich bei der Beschreibung einer zweiten Figur zu einem bestimmten Bezugszeichen, welches bereits im Zusammenhang mit einer anderen, ersten Figur erläutert wurde, keine näheren Erläuterungen finden. In einem solchen Fall ist bei der Ausführungsform der zweiten Figur davon auszugehen, dass die dort mit diesem Bezugszeichen gekennzeichnete Komponente auch ohne nähere Erläuterung im Zusammenhang mit der zweiten Figur die gleichen Eigenschaften und Funktionalitäten aufweist, wie im Zusammenhang mit der ersten Figur erläutert. Des Weiteren werden der Übersichtlichkeit wegen teilweise nicht sämtliche Bezugszeichen in sämtlichen Figuren dargestellt, sondern nur diejenigen, auf die in der Beschreibung der jeweiligen Figur Bezug genommen wird.

Es zeigen:
- FIG 1: ein CT-System,
- FIG 2: optimierte Positionen eines Quelle-Detektor-Systems zur Aufnahme eines Bildes eines Objekts,
- FIG 3: ein Verfahren zur Ermittlung der optimalen Positionen in allgemeiner Visualisierung,
- FIG 4: das Verfahren zur Ermittlung der optimalen Positionen bei iterativem Vorgehen,
- FIG 5: mögliche Positionen eines Quelle-Detektor-Systems auf einer Kugeloberfläche,
- FIG 6: einen Ablauf zur iterativen Auswahl von optimalen Projektionen und Positionen,
- FIG 7: ein einfaches Beispiel für den Zusammenhang von Ortsund Fourierraum,
- FIG 8: ein Beispiel für die Wichtung des FourierQualitätsindex und
- FIG 9: ein Objekt OBJ mit einem bestimmten Abbildungsbereich OBJ_AUS.

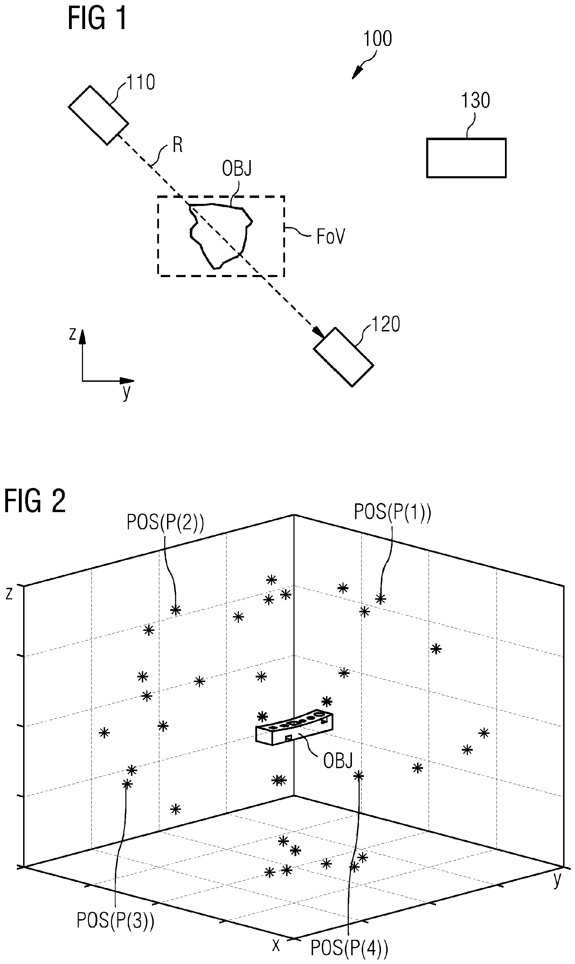

Die FIG 1 zeigt in einer stark vereinfachten und abstrahierten Prinzipdarstellung ein Szenario für ein Computertomographiesystem (CT-System) 100 mit einer Röntgenquelle 110, einem Detektor 120 und einer Steuereinheit 130, welche eingerichtet ist, das CT-System zu steuern und dabei bspw. das Quelle-Detektor-System 110, 120 an verschiedene Positionen zu manövrieren, um Aufnahmen von einem zu untersuchenden Objekt zu erzeugen. Hierzu kann die Steuereinheit 130 bspw. einen nicht dargestellten Roboterarm des CT-Systems 100 steuern. Die Steuereinheit 130 kann des Weiteren eingerichtet sein, das im Folgenden beschriebene Verfahren zur Bestimmung der zur Untersuchung des Objekts optimalen Positionen des Quelle-Detektor-Systems 110, 120 auszuführen.

Mit dem CT-System 100 soll eine Anzahl NPROJ von Projektionen P(b) mit b=1,...,NPROJ eines in einem Untersuchungsbereich FoV des CT-Systems angeordneten Objekts OBJ aufgenommen werden, aus denen dann in bekannter Art und Weise, bspw. über eine gefilterte Rückprojektion, Aufnahmen AUF(b) des Objektes OBJ erzeugt werden. Die Aufnahmen AUF(b) sind bspw. zweidimensionale Bilder des Objekts OBJ im Ortsraum, welche ggf. auch zu einem dreidimensionalen Bild kombiniert werden können. Typischerweise sind Quelle 110 und Detektor 120 beweglich angeordnet, so dass das Objekt OBJ aus unterschiedlichen Richtungen R aufgenommen werden kann.

In der FIG 2 sind exemplarisch ausgewählte Positionen POS(a) mit a=1,...,NPOS und typischerweise NPOS=NPROJ eines nicht dargestellten Quelle-Detektor-Systems des CT-Systems in einem kartesischen Koordinatensystem mit jeweiligen Sternen markiert, wobei ein jeweiliger Stern bspw. die Messposition POS(a) der Quelle zur Erzeugung der Projektion P(a) bzw. daraus folgend der Aufnahme AUF(a) markieren kann. Der Übersichtlichkeit wegen sind nur einige wenige, willkürlich ausgewählte Positionen mit Bezugszeichen "POS(p1)" etc. gekennzeichnet. Wie einleitend erläutert ist mit der Position der Quelle automatisch auch die Position des Detektors bzw. des gesamten Quelle-Detektor-Systems festgelegt. Unterschiedliche Projektionen P(p1), P(p2) mit p1≠p2 unterscheiden sich dadurch, dass sich die Quelle zur jeweiligen Aufnahme an unterschiedlichen Positionen POS(p1), POS(p2) befindet.

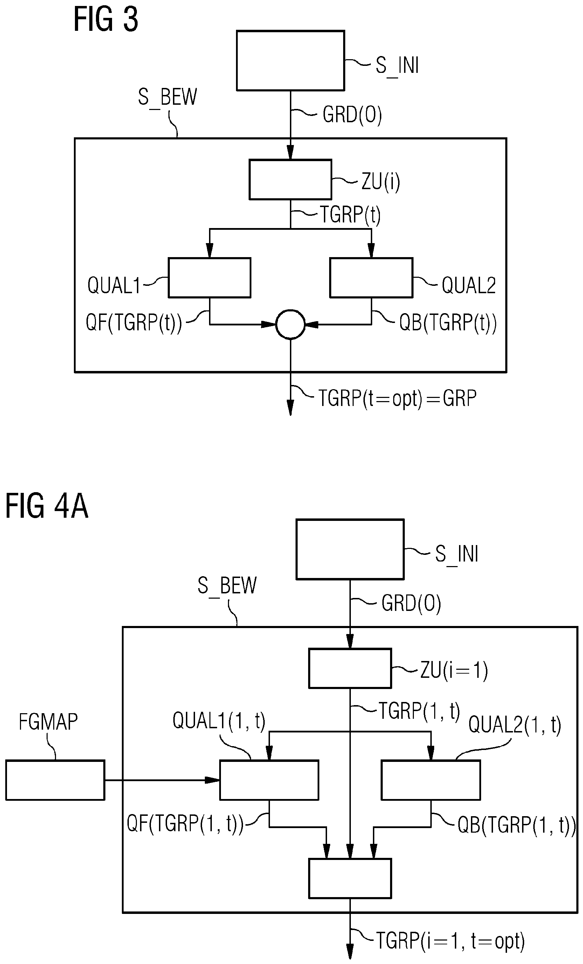

Wie einleitend erläutert verspricht eine geeignete Auswahl von Positionen POS(a) der Quelle eine optimierte Abbildung des Objekts OBJ mit dem CT-System. Dabei kann die Abbildung hinsichtlich des Messdauer sowie hinsichtlich der räumlichen Auflösung optimiert sein. Um dies zu erreichen werden wie im Folgenden im Zusammenhang mit FIG 3 beschrieben die am besten geeigneten Positionen POS(a) der Quelle ermittelt, wobei hierbei letztlich sogar das Objekt OBJ selbst, d.h. dessen Geometrie und innerer Aufbau, Berücksichtigung findet.

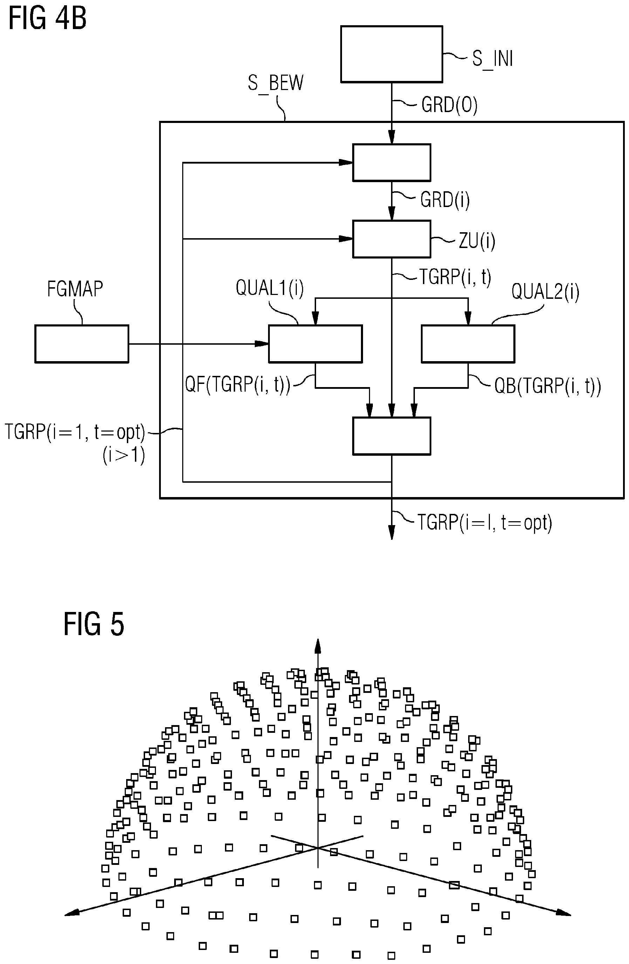

Zum Bestimmen der für die Abbildung des Objekts OBJ idealen Positionen der Quelle wird zunächst in einem Bereitstellungsschritt S INI eine ursprüngliche Grundmenge GRD(0) mit einer Vielzahl VP von Projektionen P(p) des Objekts OBJ mit p=1,...,VP zur Verfügung gestellt. Die Projektionen P(b) der ursprünglichen Grundmenge GRD(0) können bspw. anhand eines CAD-Datensatzes des Objekts OBJ simuliert sein oder aber reale Projektionen des Objekts darstellen, bspw. aus einer früheren eines identischen Objektes oder aus einer groben Vorabmessung des Objekts OBJ mit nicht idealen Messparametern. Verschiedene Projektionen P(p1), P(p2) mit p1, p2=1,...,VP und p1≠p2 der Vielzahl VP von Projektionen P(p) dieser ursprünglichen Grundmenge GRD(0) entsprechen dabei Abbildungen des Objekts OBJ, welche von unterschiedlichen Positionen POS(p1), POS(p2) der Quelle simuliert bzw. aufgenommen sind, wobei jeweils eine solche Projektion P(p1) und eine solche Messposition POS(p1) etc. einander zugeordnet sind. Wenn also eine bestimmte Projektion P(px) der Grundmenge GRD(0) ausgewählt wird, ist unmittelbar auch die zugeordnete Position POS(px) bekannt. Bspw. können die Positionen POS(p) gleichmäßig auf einer Kugeloberfläche verteilt sein. Dies ist in der FIG 5 für die obere Hälfte einer entsprechenden Kugel angedeutet, wobei auch hier eine jeweilige Markierung eine Position der Quelle zur Erzeugung einer jeweiligen Projektion kennzeichnen soll.

Grundsätzlich ist es denkbar, für eine reale Messung des Objekts OBJ sämtliche Positionen auf der Kugeloberfläche zu verwenden und eine entsprechende Vielzahl VP von Projektionen zu erzeugen. Dies bringt jedoch zum Einen eine entsprechend ausgedehnte Messdauer mit sich und zum Anderen werden spezifische Eigenschaften des Objekts OBJ hierbei nicht berücksichtigt.

Es werden daher in einem Bewertungsschritt S_BEW diejenigen Messpositionen ermittelt, die eine hinsichtlich Messdauer und Abbildungseigenschaften optimierte Bildgebung versprechen. Hierzu werden aus der ursprünglichen Grundmenge GRD(0) von Projektionen wie im Folgenden erläutert diejenigen Projektionen ausgewählt und einer Menge GRP zugeordnet, für die ein Qualitätsindex Q(GRP) optimiert ist. Da Projektionen P(p) und Messpositionen POS(p) einander zugeordnet sind, ergibt sich aus der konkreten Auswahl von Projektionen der Menge GRP unmittelbar eine Auswahl von Messpositionen, die dann zur eigentlichen Messung bzw. Bildgebung des Objekts OBJ Verwendung finden.

Mit anderen Worten werden also die zu bestimmenden Messpositionen POS(a) als diejenigen Positionen des Quelle-Detektor-Systems festgelegt, welche den Projektionen der ausgewählten Menge GRP von Projektionen zugeordnet sind bzw. aus denen die Projektionen der ausgewählten Menge GRP simuliert bzw. aufgenommen wurden. Dabei wird ausgenutzt, dass für die ursprüngliche Grundmenge GRD(0) jeweils eine Projektion aus der ursprünglichen Grundmenge GRD(0) und eine entsprechende Position des Quelle-Detektor-Systems einander zugeordnet sind, so dass bei Auswahl einer bestimmten Projektion aus der ursprünglichen Grundmenge GRD(0) aufgrund der eindeutigen Zuordnung zueinander unmittelbar auch die entsprechende Position und Pose des Quelle-Detektor-Systems ausgewählt ist.

Der Qualitätsindex Q(GRP), anhand dessen die Projektionen ausgewählt und die Menge GRP aufgebaut werden, kann zumindest aus einem Bildqualitätsindex QB und einem Fourier-Qualitätsindex QF berechnet werden, wobei generell gelten kann Q(GRP) = QB(GRP) o QF und wobei insbesondere der mathematische Operator "oʺ für eine Multiplikation stehen kann.

Zur Auswahl der Projektionen für die Menge GRP wird, allgemein ausgedrückt, im Bewertungsschritt S_BEW eine Anzahl NTGRP von Teilgruppen TGRP(t) mit t=1,..., NTGRP erzeugt, indem einer jeweiligen Teilgruppe TGRP(t) eine Anzahl N von Projektionen aus der ursprünglichen Grundmenge GRD(0) zugeordnet wird, so dass eine jede erzeugte Teilgruppe jeweils eine oder mehrere Projektionen aus der ursprünglichen Grundmenge GRD(0) umfasst.

Für jede derartige Teilgruppe TRGP(t) wird ein Bildqualitätsindex QB(TRGP(t)) berechnet, indem jeweils aus der Gesamtheit der Projektionen der jeweiligen Teilgruppe TGRP(t) ein Bild B(t) rekonstruiert und für das rekonstruierte Bild B(t) eine Qualitätsmetrik bestimmt wird, welche dann als Bildqualitätsindex QB(TGRP(t)) für die jeweilige Teilgruppe TGRP(t) angenommen wird. Des Weiteren kann jeder Teilgruppe TRGP(t) entsprechend deren Projektionen P ein Fourier-Qualitätsindex QF(TRGP(t)) zugeordnet werden, der zumindest einem Fourier-Qualitätsindex QF(p) entspricht, der zumindest einer der Projektionen der jeweiligen Teilgruppe TRGP(t) zugeordnet ist. Es wird schließlich diejenige Teilgruppe TGRP(t=opt) als Menge GRP ausgewählt, für die eine Kombination aus Bildqualitätsindex QB(TRGP(t)) und Fourier-Qualitätsindex QF(TRGP(t)) optimal ist. Mit anderen Worten umfasst also die Menge GRP diejenigen Projektionen aus der ursprünglichen Grundmenge GRD(0), die die ausgewählte Teilmenge TGRP(t=opt) umfasst.

Konkret ausgedrückt und nunmehr bezogen auf die FIG 4A, 4B kann der Bewertungsschritt S BEW zur Auswahl der Projektionen für die Menge GRP eine oder vorzugsweise mehrere Iterationen i mit i=1,...,I und 1≤I≤VP umfassen. Die FIG 4A zeigt die Herangehensweise für i=1, während die FIG 4B die Situation für i>1 betrifft.

In jeder Iteration i wird zunächst in einem Zuordnungsschritt ZU(i) eine Anzahl NTGRP(i) von Teilgruppen TGRP(i,t) mit t=1,...,NTGRP(i) erzeugt, indem einer jeweiligen Teilgruppe TGRP(i,t) eine bestimmte Anzahl N(i) von Projektionen aus der ursprünglichen Grundmenge GRD(0) zugeordnet wird, so dass eine jeweilige Teilgruppe TGRP(i,t) jeweils eine oder mehrere Projektionen aus der ursprünglichen Grundmenge GRD(0) umfasst. Im Anschluss daran wird in der Iteration i in einer ersten Qualitätsbewertung QUAL1(i) jeder der im Zuordnungsschritt ZU(i) erzeugten Teilgruppen TGRP(i,t) ein Fourier-Qualitätsindex QF(TGRP(i,t)) zugeordnet und/oder in einer zweiten Qualitätsbewertung QUAL2(i) für jede der im Zuordnungsschritt ZU(i) erzeugten Teilgruppen TGRP(i,t) ein Bildqualitätsindex QB(TGRP(i,t)) berechnet. Es ist zwar denkbar, dass nur die erste oder nur die zweite Qualitätsbewertung ausgeführt wird, jedoch verspricht die Verwendung beider Qualitätsbewertungen bessere Ergebnisse.

Aus den im Zuordnungsschritt ZU(i) erzeugten Teilgruppen TGRP(i,t) wird nun in der Iteration i diejenige Teilgruppe TGRP(i,t=opt) ausgewählt, für die ein Index(i,t) abhängig vom Bildqualitätsindex QB(TGRP(i,t=opt)) und/oder vom Fourier-Qualitätsindex QF(TGRP(i,t=opt)) optimal ist, wobei der Index(i,t) insbesondere durch Multiplikation des Bildqualitätsindex QB(TGRP(i,t=opt)) und des Fourier-Qualitätsindex QF(TGRP(i,t=opt)) gebildet wird. Schließlich werden in der letzten Iteration i=I die Projektionen der in dieser letzten Iteration ausgewählten Teilgruppe TGRP(i=I,t=opt) der Menge GRP zugeordnet. D.h. die Menge GRP umfasst nach Abschluss des Bewertungsschritts S BEW diejenigen Projektionen, die in der in der letzten Iteration i=I ausgewählten Teilgruppe TGRP(i=I,t=opt) enthalten sind. Wie oben bereits erläutert sind damit unmittelbar auch die optimalen Positionen der Quelle des CT-Systems zur Aufnahme des Objekts OBJ festgelegt.

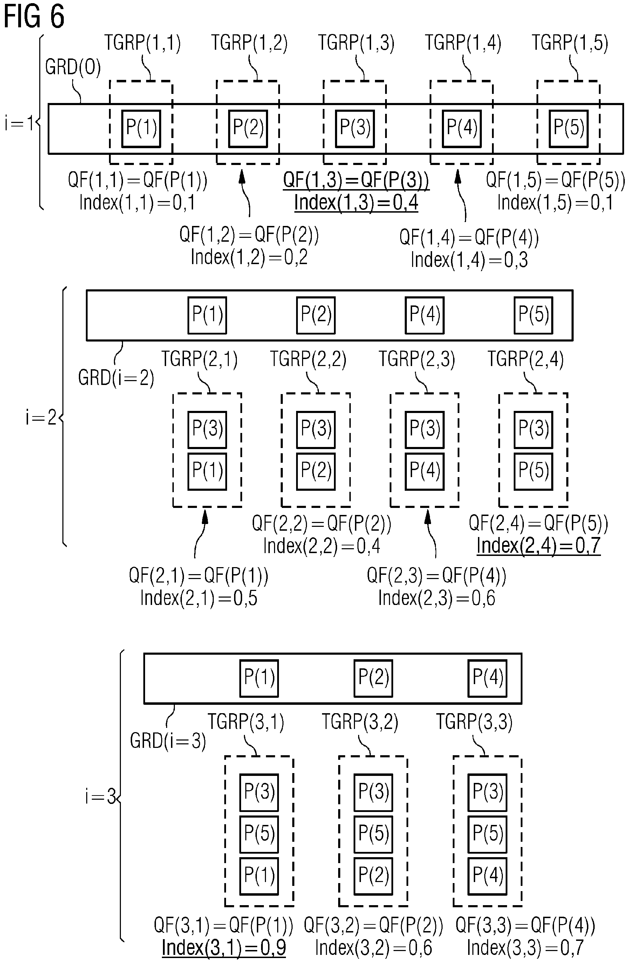

Im Zuordnungsschritt ZU(i) einer jeweiligen Iteration i erfolgt die Zuordnung von Projektionen aus der ursprünglichen Grundmenge GRD(0) zu einer jeweiligen Teilgruppe TGRP(i,t) derart, dass zunächst in der ersten Iteration, d.h. für i=1, eine jede Teilgruppe TGRP(1,t) jeweils eine der Projektionen der ursprünglichen Grundmenge GRD(0) umfasst, d.h. N(i=1)=1 und NTGRP(i=1)=VP, wobei unterschiedliche Teilgruppen unterschiedliche Projektionen der ursprünglichen Grundmenge GRD(0) umfassen. In jeder weiteren Iteration i mit i>1 wird eine jeweilige Teilgruppe TGRP(i,t) dadurch erzeugt, dass sie zum Einen sämtliche Projektionen der im vorherigen Schritt i-1 anhand des jeweiligen Index ausgewählten Teilgruppe TGRP(i-1,t=opt) umfasst, d.h. insofern sind die Teilgruppen in einer jeweiligen Iteration i identisch, und zusätzlich zum Anderen jeweils eine der Projektionen einer jeweiligen reduzierten Grundmenge GRD(i) von Projektionen umfasst. Dabei soll gelten, dass unterschiedliche Teilgruppen TGRP(i,t1), TGRP(i,t2) unterschiedliche Projektionen der reduzierten Grundmenge GRD(i) umfassen. Dabei unterscheidet sich für eine jeweilige Iteration i die dort verwendete reduzierte Grundmenge GRD(i) von Projektionen von der ursprünglichen Grundmenge GRD(0) dadurch, dass die reduzierte Grundmenge GRD(i) die Projektionen der in der vorhergehenden Iteration i-1 ausgewählten Teilgruppe TGRP(i-1,t=opt) nicht enthält, während sie in der ursprünglichen Grundmenge GRD(0) noch enthalten sind. Für eine jeweilige Iteration i kann also die dort verwendete reduzierte Grundmenge GRD(i) von Projektionen bspw. dadurch gebildet werden, dass die Projektionen der in der vorhergehenden Iteration i-1 ausgewählten Teilgruppe TGRP(i-1,t=opt) jeweils aus der Grundmenge GRD(0) entfernt werden, so dass sie in der Iteration i nicht mehr zur Bildung von Teilgruppen zur Verfügung stehen. Konsequenterweise wird also quasi mit jeder Iteration eine Projektion aus der Grundmenge GRD(0) entfernt. Für eine jeweilige Iteration i gilt konsequenterweise N(i)=i, NTGRP(i)=VP-i+1 und die Anzahl von Projektionen in der jeweiligen reduzierten Grundmenge GRD(i) beträgt ebenfalls VP-i+1. Der Zuordnungsschritt ZU(i) einer jeweiligen Iteration i wird im Folgenden am konkreten Beispiel im Zusammenhang mit FIG 6 erläutert.

Um das Vorgehen im Bewertungsschritt S BEW insbesondere hinsichtlich der Zuordnungsschritte ZU(i) zu verdeutlichen und den Ablauf zur iterativen Auswahl der optimalen Projektionen und Positionen zu demonstrieren, wird in FIG 6 angenommen, dass VP=5 gilt, d.h. die Grundmenge GRD(0) umfasst fünf Projektionen P(1), P(2), P(3), P(4), P(5), und dass das Verfahren lediglich I=3 Iterationen umfassen soll.

In der ersten Iteration i=1 werden fünf Teilgruppen TGRP(1,1),...,TGRP(1,5) erzeugt, wobei eine jede Teilgruppe TGRP(1,t) jeweils eine der Projektionen P(1),...,P(5) der Grundmenge GRD(0) umfasst. Für jede dieser Teilgruppen wird wie oben beschrieben der Index(i=1,t) berechnet, wobei in FIG 6 willkürliche Werte verwendet werden. In der ersten Iteration ergibt sich bspw. für den Index(1,t=3) der optimale Wert. Dementsprechend wird in dieser Iteration i=1 die Teilgruppe TGRP(1,3) ausgewählt. Diese umfasst hier lediglich die Projektion P(3).

In der zweiten Iteration i=2 werden neue Teilgruppen TGRP(2,1),...,TGRP(2,4) dadurch erzeugt, dass jede dieser Teilgruppen jeweils die Projektionen der ausgewählten Teilgruppe TGRP(1,3) der vorhergehenden Iteration umfasst, d.h. hier lediglich die Projektion P(3). Zusätzlich wird den unterschiedlichen Teilgruppen jeweils eine der Projektionen einer reduzierten Grundmenge GRD(i=2) zugeordnet. Die reduzierte Grundmenge GRD(i=2) für die zweite Iteration i=2 wird dadurch gebildet, dass aus der ursprünglichen Grundmenge GRD(0) die Projektionen der in der vorhergehenden Iteration i=1 ausgewählten Teilgruppe TGRP(1,3) entfernt werden. D.h. in diesem Fall, dass die reduzierte Grundmenge GRD(i=2) lediglich die Projektion P(3) nicht enthält. Die verbleibenden Projektionen P(1), P(2), P(4), P(5) werden wie in FIG 6 angedeutet den unterschiedlichen Teilgruppen zugeordnet. Für jede der bei i=2 so erzeugten Teilgruppen wird wiederum Index(i=2,t) berechnet, wobei auch hier in FIG 6 willkürliche Werte verwendet werden. In der zweiten Iteration ergibt sich bspw. für den Index(2,t=4) der optimale Wert. Dementsprechend wird in dieser Iteration i=2 die Teilgruppe TGRP(2,4) ausgewählt. Diese umfasst hier die Projektionen P(3) und P(5).

In der dritten Iteration i=3 werden neue Teilgruppen TGRP(i,t) mit t=1,...,3 dadurch erzeugt, dass jede dieser Teilgruppen jeweils die Projektionen der ausgewählten Teilgruppe TGRP(2,4) der vorhergehenden Iteration i=2 umfasst, d.h. hier die Projektionen P(3), P(5). Zusätzlich wird den unterschiedlichen Teilgruppen jeweils eine der Projektionen der reduzierten Grundmenge GRD(i=3) zugeordnet. Die reduzierte Grundmenge GRD(i=3) für die dritte Iteration i=3 wird dadurch gebildet, dass aus der ursprünglichen Grundmenge GRD(0) die Projektionen der in der vorhergehenden Iteration i=2 ausgewählten Teilgruppe TGRP(2,4) entfernt werden. D.h. in diesem Fall, dass die reduzierte Grundmenge GRD(i=3) die Projektionen P(3) und P(5) nicht enthält. Die verbleibenden Projektionen P(1), P(2), P(4) werden wie in FIG 6 angedeutet den unterschiedlichen Teilgruppen zugeordnet. Für jede der bei i=3 so erzeugten Teilgruppen wird wiederum Index(i=3,t) berechnet, wobei auch hier in FIG 6 willkürliche Werte verwendet werden. In der dritten Iteration ergibt sich bspw. für den Index(3,t=1) der optimale Wert. Dementsprechend wird in dieser Iteration i=3 die Teilgruppe TGRP(3,1) ausgewählt. Diese umfasst hier die Projektionen P(1), P(3) und P(5).

Am obigen Beispiel wird sichtbar, dass für eine jeweilige Iteration i gilt N(i)=i und NTGRP(i)=VP-i+1 und dass die Anzahl von Projektionen in der jeweiligen reduzierten Grundmenge GRD(i) ebenfalls VP-i+1 beträgt. Da in diesem Beispiel angenommen wurde, dass das Verfahren nur I=3 Iterationen umfasst, werden die Projektionen der in der letzten Iteration i=3 ausgewählten Teilgruppe TGRP(3,1) der Menge GRP zugeordnet.

In der ersten Qualitätsbewertung QUAL1(i) einer jeweiligen Iteration i wird jeder der im Zuordnungsschritt ZU(i) erzeugten Teilgruppen TGRP(i,t) ein Fourier-Qualitätsindex QF(TGRP(i,t)) zugeordnet, wobei der in der ersten Qualitätsbewertung QUAL1(i) einer jeweiligen Teilgruppe TRGP(i,t) zugeordnete Fourier-Qualitätsindex QF(TRGP(i,t)) zumindest einem Fourier-Qualitätsindex QF(px) entspricht, der zumindest einer der Projektionen P(px) der jeweiligen Teilgruppe TRGP(i,t) zugeordnet ist.

Dabei wird einer jeweiligen Teilgruppe TRGP(i,t) insbesondere derjenige Fourier-Qualitätsindex QF(TRGP(i,t)) zugeordnet, welcher der Projektion P(px) zugeordnet ist, die dieser Teilgruppe TGRP(i,t) zuletzt, d.h. in der Iteration i, aus der jeweiligen reduzierten Grundmenge GRD(i) hinzugefügt wurde.

Mit anderen Worten wird also in der Iteration i einer jeweiligen Teilgruppe TRGP(i,t) vorzugsweise der Fourier-Qualitätsindex QF(px) derjenigen Projektion P(px) zugeordnet, die dieser Teilgruppe TGRP(i,t) zuletzt, d.h. in der Iteration i, aus der entsprechenden reduzierten Grundmenge GRD(i) zugeordnet wurde, d.h. QF(TRGP(i,t))=QF(px).

Dieses Vorgehen setzt voraus, dass jeder Projektion P(p) der ursprünglichen Grundmenge GRD(0) ein solcher Fourier-Qualitätsindex QF(P(p)) zugeordnet ist. Der Fourier-Qualitätsindex QF(p)=QF(P(p)) wird einer jeweiligen Projektion P(p) aus einer Datenbasis FGMAP zugeordnet, welche insbesondere vor der Ausführung des Bewertungsschrittes S_BEW erzeugt wird. Zur Erzeugung der Datenbasis FGMAP wird zunächst anhand der Vielzahl VP von Projektionen P(p) der ursprünglichen Grundmenge GRD(0) ein typischerweise dreidimensionaler Fourier-Datensatz im Fourierraum generiert. Anschließend werden für jede der Projektionen P(p) der ursprünglichen Grundmenge GRD(0) im Wesentlichen entlang einer der Richtung einer jeweiligen Projektion P(p) entsprechenden Richtung im Fourier-Datensatz und durch dessen Ursprung die dortigen Werte zu einem jeweiligen Fourier-Gesamtwert FG(P(p)) aufaddiert. Dabei werden insbesondere die Fourierkoeffizienten verwendet, d.h. das Amplitudenspektrum, während Phaseninformationen unberücksichtigt bleiben. Ein jeweiliger so ermittelter Fourier-Gesamtwert FG(P(p)) repräsentiert dann den Fourier-Qualitätsindex QF(P(p))=FG(P(p)), der der entsprechenden Projektion P(p) zugeordnet wird. Konsequenterweise umfasst die Datenbasis FGMAP sämtliche so erzeugten Fourier-Qualitätsindizes QF(P(p)) für sämtliche Projektionen P(p) der ursprünglichen Grundmenge GRD(0). Durch dieses Vorgehen wird es möglich, die Richtungen bzw. Projektionen mit den höchsten Fourierkoeffizienten zu identifizieren, welche dann die besten Kandidaten zur Auswahl für die Teilgruppen darstellen. Damit wird sichergestellt, dass die ausgewählte Teilgruppe Projektionen umfasst, die die Details des abzubildenden Gegenstands am besten erfassen. Dieses Konzept basiert auf der Erkenntnis im Zusammenhang mit dem sog. Fourier-Slice-Theorem, dass prominente bzw. dominante Strukturen eines abzubildenden Gegenstands im Fourierraum, insbesondere im Amplitudenspektrum bzw. in den Fourierkoeffizienten, Geraden durch den Ursprung des Fourierraums mit im Vergleich zur Umgebung erhöhten Werten bewirken. Derartige Strukturen können also durch das beschriebene Aufsummieren der Fourierkoeffizienten entlang der Linien durch den Ursprung identifiziert werden, indem die Summen für alle Richtungen gebildet und miteinander verglichen werden.

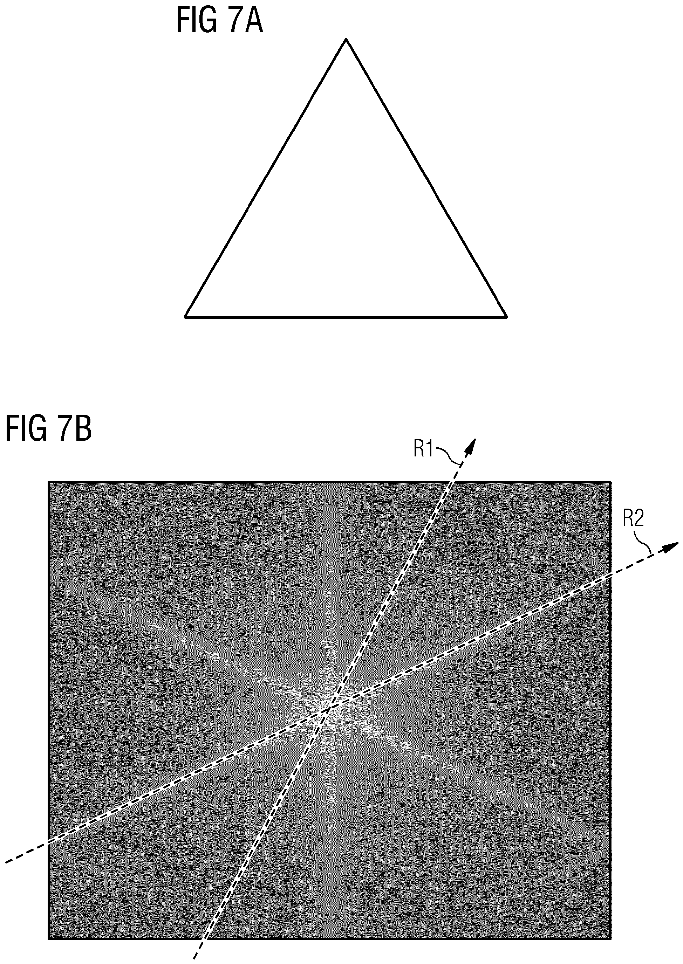

Dieses Prinzip ist für den stark vereinfachten Fall eines Dreiecks in den FIG 7A und 6B schematisch dargestellt. Die FIG 7B zeigt in einer Graustufendarstellung die 2D-Fouriertransformierte des 2D-Dreiecks der FIG 7A, wobei die Graustufen die Fourierkoeffizienten repräsentieren, d.h. das Amplitudenspektrum, nicht aber Phaseninformationen. Die als Linien ausgebildeten signalstärkeren Bereiche in FIG 7B resultieren aus den dominanten Strukturen der FIG 7A, d.h. sie stehen im Zusammenhang mit den Kanten des Dreiecks. Die beiden Pfeile R1, R2 in FIG 7B, die gleichzeitig insofern für entsprechende Projektionsrichtungen stehen, als dass die Richtungen R1, R2 jeweils senkrecht zur entsprechenden Projektionsrichtung orientiert sind, repräsentieren zwei Richtungen, entlang derer die Fourierkoeffizienten wie oben beschrieben aufsummiert werden. Die Aufsummierung der Grauwerte bzw. Fourierkoeffizienten entlang R1 ergibt einen vergleichsweise niedrigen Gesamtwert, einhergehend mit einem niedrigen Fourier-Qualitätsindex QF(P(R1)), während die Aufsummierung entlang R2 einen vergleichsweise hohen Gesamtwert ergibt, einhergehend mit einem höheren Fourier-Qualitätsindex QF(P(R2)). Im oben beschriebenen Zuordnungsschritt ZU(i) würde in diesem Fall also die Projektion P(R2) ausgewählt und aus der Richtung von R2 folgt wiederum unter Beachtung dessen, dass die Projektionsrichtung im Ortsraum senkrecht auf der so gewählten Richtung im Fourierraum steht, die entsprechende Richtung der zugehörigen Projektion. Dabei meint auch hier der Ausdruck "Richtung der Projektion" bzw. "Projektionsrichtung" die Richtung von der Quelle 110 zum Detektor 120 zur Aufnahme der Projektion P(a), also letztlich die Position POS(a). Dieses Vorgehen bewirkt also letztlich, dass wie oben erwähnt sogar das Objekt OBJ selbst, d.h. dessen Geometrie und innerer Aufbau, bei der Auswahl der optimalen Positionen POS Berücksichtigung findet, da sich diese Eigenschaften direkt in der Fouriertransformierten der Abbildung des Objekts OBJ niederschlagen.

Die Datenbasis FGMAP kann bspw. als zweidimensionale Karte dargestellt sein, wobei die erste Dimension einen Winkel 0°≤φ<360° und die zweite Dimension -90°≤θ≤90° repräsentieren. Einen festen Radius R vorausgesetzt können über diese Winkel φ, θ Positionen auf einer Kugeloberfläche mit Radius R beschrieben werden, wobei diese Positionen bspw. die Positionen der Quelle sein können, anhand derer die Projektionen der Grundmenge GRD(0) bestimmt werden. In dem Fall kann angenommen werden, dass das Objekt OBJ im Zentrum der Kugel angeordnet ist und die Quelle zur Erzeugung bzw. Simulation der Projektionen an Positionen [φ1,θ1], [φ2,θ2], [φ3,θ3],... auf der Kugeloberfläche angeordnet wird. Bspw. können einer oder beide Winkel φ, θ zwischen zwei Positionen um jeweils 5° geändert werden, so dass 72*36=2592 Positionen für die Quelle und damit NPROJ=2592 Projektionen resultieren. Wie im Zusammenhang mit der ersten Qualitätsbewertung QUAL1(i) beschrieben werden für diese erzeugten Projektionen im Fourierraum zur Erzeugung der Datenbasis FGMAP entlang von bestimmten Geraden durch den Ursprung des Fourierraums die Fourierkoeffizienten aufsummiert, um den jeweiligen Fourier-Qualitätsindex QF zu bestimmen. Diese Geraden verlaufen in Richtungen, die den Richtungen der Projektionen entsprechen bzw. den 2592 Winkelpaaren [φ,θ].

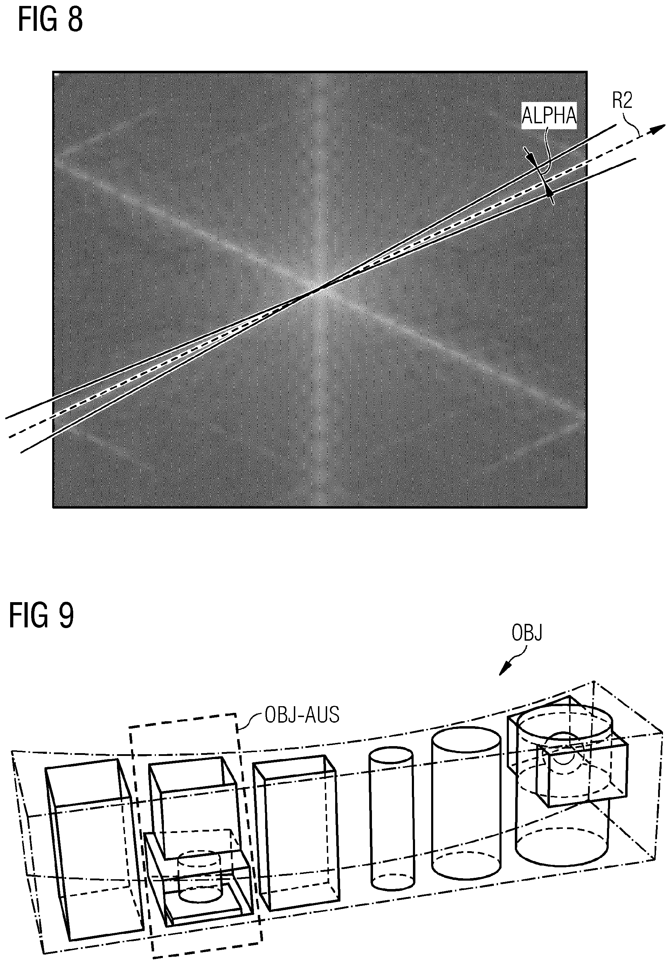

Optional können in der Iteration i die Fourier-Qualitätsindizes QF(p') von Projektionen P(p') in der Datenbasis FGMAP, welche benachbart zu derjenigen Projektion P(pi) liegen, die in dieser Iteration i der Teilgruppe TGRP(i,t) zugeordnet wurde, mit einem Wichtungsfaktor W<1 multipliziert werden. Dementsprechend würden die Werte in der Datenbasis FGMAP mit jeder Iteration i verändert werden. Hierdurch wird eine räumlich homogenere Auswahl von Projektionen aus der Datenbasis FGMAP und damit konsequenterweise eine weitestgehend gleichverteilte Positionierung des Quelle-Detektor-Systems für die einzelnen Aufnahmen erreicht, was sich am Ende bei der realen Bildgebung des Objekts darin niederschlägt, dass das dann erzeugte Bild aufgrund der besseren Homogenität der Aufnahmerichtungen weniger artefaktbelastet ist. Mit aufgrund der Wichtung <1 reduziertem Fourier-Qualitätsindex QF(p') kann erreicht werden, dass in einer folgenden Iteration i'>i gerade nicht der Fourier-Qualitätsindex QF(p') einer in der Nachbarschaft der früher ausgewählten Projektion P(p) liegenden Projektion der beste Fourier-Qualitätsindex QF(p') ist, sondern dass eine entfernt von der früher ausgewählten Projektion P(p) liegende Projektion P(p2) den besten Fourier-Qualitätsindex QF(p2) aufweist, so dass schließlich diese Projektion P(p2) zur Zuordnung zur Teilgruppe TRGP(i,t) ausgewählt wird. In diesem Zusammenhang bezieht sich der Begriff "benachbart" zu einer Projektion P insbesondere auf die Richtung dieser Projektion im Orts- sowie auch dementsprechend im Fourierraum. Bspw. können diejenigen Projektionen als "banachbart" zu einer ersten Projektion gelten, die sich innerhalb eines geraden Kreiskegels befinden, dessen Spitze im Ursprung des Fourierraums liegt, dessen Symmetrieachse durch die Richtung der ersten Projektion gebildet wird und der einen vorgegebenen Öffnungswinkel von bspw. 3° aufweist. Dies ist schematisch in der FIG 8 dokumentiert, welche grundsätzlich der FIG 7B entspricht. Die ausgewählte Projektion ist P(R2), entsprechend der Richtung R2 im Fourierraum, und um diese Richtung R1 herum wird ein Bereich aufgespannt, der im dreidimensionalen Raum einem Kegel mit einem Öffnungswinkel ALPHA entspricht. Die Fourier-Qualitätsindizes QF(p') der Projektionen, die innerhalb dieses Kegels liegen, können bspw. mit einem Faktor W=0,5 multipliziert werden. Auch kompliziertere Gewichtungsmöglichkeiten sind grundsätzlich denkbar, bspw. nach einer Polynomfunktion oder insbesondere anhand eines sog. "Tuy-Kriteriums".

In der zweiten Qualitätsbewertung QUAL2(i) in einer jeweiligen Iteration i wird für jede der im Zuordnungsschritt ZU(i) erzeugten Teilgruppen TGRP(i,t) ein Bildqualitätsindex QB(TGRP(i,t)) berechnet. Zur Berechnung dieses jeweiligen Bildqualitätsindex QB(TRGP(i,t)) für eine jeweilige Teilgruppe TRGP(i,t) wird jeweils aus den Projektionen dieser Teilgruppe TGRP(i,t) ein zwei- oder dreidimensionales Bild B(i,t) typischerweise im Ortsraum rekonstruiert und für das jeweilige rekonstruierte Bild B(i,t) eine Qualitätsmetrik bestimmt, welche dann den Bildqualitätsindex QB(TGRP(i,t)) für die jeweilige Teilgruppe TGRP(i,t) repräsentiert. Die Bestimmung der Qualitätsmetrik kann anhand an sich bekannter Ansätze erfolgen, indem das rekonstruierte Bild B(i,t) entweder direkt evaluiert wird, bspw. mittels einer referenzlosen, rauschquantifizierenden Metrik wie der Shannon-Entropie oder dem Gini-Koeffizienten, oder durch Vergleich mit einem Referenzvolumen, bspw. unter Zuhilfenahme eines RMSE-Verfahrens (Root-Mean-Square Error) oder eines SSIM-Ansatzes (Structural Similarity Index).

Das somit vorgeschlagene Verfahren berücksichtigt aufgrund der Verwendung des Fourier-Qualitätsindex die Geometrie und den inneren Aufbau des zu untersuchenden Objekts, da sich diese Eigenschaften direkt im Fourierraum sichtbar niederschlagen und bei der Aufsummierung zum Tragen kommen. Durchgeeignete Wahl der Anzahl von Iterationen I lässt sich direkt Einfluss auf die Messdauer nehmen, da je Iteration eine Position des Quelle-Detektor-Systems resultiert. Da davon auszugehen ist, dass bereits mit der ersten Iteration i=1 eine relevante Positionierung gefunden wird, und mit den nächsten Iterationen weitere relevante Positionierungen resultieren, wird eine gezielte, an das Objekt angepasste Bildgebung in vergleichsweise kurzer Zeit möglich.

Eine weitere Verbesserung verspricht eine Fokussierung auf einen bestimmten Abbildungsbereich OBJ AUS des Objekts OBJ. In diesem Fall betreffen die Projektionen der Grundmenge GRD(0) nicht das komplette Objekt OBJ, sondern wie in FIG 9 angedeutet lediglich einen Ausschnitt OBJ AUS davon, in dem eine besonders interessierende Struktur des Objekts OBJ liegen kann, auf die das Bildgebungsverfahren besonders zugeschnitten werden soll. Das kann bspw. dadurch realisiert sein, dass die VP Projektionen P(p) der im Bereitstellungsschritt S_INI bereitgestellten ursprünglichen Grundmenge GRD(0) eben nicht mehr Abbildungen des kompletten Objekts OBJ sind, sondern lediglich dem Ausschnitt OBJ AUS entsprechen. Die oben beschriebene Herangehensweise wird hierdurch jedoch nicht verändert, d.h. die beschriebenen Schritte zur Bestimmung der optimalen Positionen des Quelle-Detektor-Systems laufen genauso ab, wie oben erläutert. Da jedoch der Datenumfang in GRD(0) aufgrund der Fokussierung auf den kleineren Abbildungsbereich OBJ AUS gegenüber OBJ wesentlich reduziert sein kann, ist das beschriebene Verfahren deutlich schneller abarbeitbar. Des Weiteren verspricht die Fokussierung auf den Abbildungsbereich OBJ AUS und die darin liegende interessierende Struktur, dass die Bildgebung mit den optimalen Positionen gerade diese Struktur optimal abbildet.

Dies kann bspw. dadurch realisiert sein, dass zwar die Projektionen P an sich unverändert bleiben und den kompletten Untersuchungsbereich FoV abdecken, dass aber zur Ausführung des oben beschriebenen Verfahrens bspw. im Zuordnungsschritt ZU(i) zur Erzeugung der Teilgruppen nur die dem Ausschnitt OBJ_AUS entsprechenden Bereiche der Projektionen P der jeweiligen Teilgruppe zugeordnet werden. Alternativ können schon die in der Grundmenge GRD(0) selbst enthaltenen Projektionen P entsprechend dem Ausschnitt OBJ AUS datenreduziert sein.

### Bezugszeichen

- 100: Computertomographiesystem
- 110: Röntgenquelle
- 120: Detektor
- 130: Steuereinheit
- AUF: Aufnahme
- FG: Fourier-Gesamtwert
- FoV: Untersuchungsbereich
- GRD(0): ursprüngliche Grundmenge
- GRD(i): reduzierte Grundmenge
- GRP: Menge von Projektionen
- OBJ: Objekt
- OBJ_AUS: Ausschnitt
- Q: Qualitätsindex
- QB: Bildqualitätsindex
- QF: Fourier-Qualitätsindex
- QUAL1: erste Qualitätsbewertung
- QUAL2: zweite Qualitätsbewertung
- P: Projektion
- POS: Position, Messposition
- S_BEW: Bewertungsschritt
- TGRP: Teilgruppe
- ZU: Zuordnungsschritt

## Patentansprüche

1. Verfahren zum Bestimmen einer Vielzahl NPOS von Messpositionen MPOS(a) mit a=1,...,NPOS eines Quelle-Detektor-Systems zur Erzeugung einer entsprechenden Vielzahl NPROJ=NPOS von Aufnahmen AUF(b) mit b=1,...,NPROJ eines zu untersuchenden Objekts, wobei
- in einem Bereitstellungsschritt S_INI eine ursprüngliche Grundmenge GRD(0) umfassend eine Vielzahl VP von Projektionen P(p) mit p=1,...,VP zumindest eines Abbildungsbereichs des zu untersuchenden Objekts OBJ bereitgestellt wird, wobei verschiedene Projektionen P(p1), P(p2) mit p1, p2=1,...,VP und p1≠p2 der Vielzahl von Projektionen P(p) Abbildungen des Abbildungsbereichs des Objekts OBJ entsprechen, welche von unterschiedlichen möglichen Positionen POS(p1), POS(p2) des Quelle-Detektor-Systems aufgenommen sind, wobei jeweils eine solche Projektion P(p) und eine solche Position POS(p) einander zugeordnet sind,
- in einem Bewertungsschritt S_BEW diejenige Menge GRP von Projektionen aus der ursprünglichen Grundmenge GRD(0) ausgewählt wird, für die ein Qualitätsindex Q(GRP) optimiert ist,
wobei die zu bestimmenden Messpositionen MPOS(a) als diejenigen Positionen des Quelle-Detektor-Systems festgelegt werden, welche den Projektionen der ausgewählten Menge GRP von Projektionen zugeordnet sind.

2. Verfahren nach Anspruch 1, **dadurch gekennzeichnet, dass** die unterschiedlichen möglichen Positionen des Quelle-Detektor-Systems insbesondere gleichmäßig auf einer Kugeloberfläche verteilt sind.

3. Verfahren nach einem der Ansprüche 1 bis 2, **dadurch gekennzeichnet, dass** der Qualitätsindex Q zumindest aus einem Bildqualitätsindex QB und einem Fourier-Qualitätsindex QF berechnet wird, so dass gilt Q(GRP) = QB(GRP) o QF, wobei der Operator "oʺ insbesondere für eine Multiplikation steht.

4. Verfahren nach einem der Ansprüche 1 bis 3, **dadurch gekennzeichnet, dass** der Bewertungsschritt S_BEW zur Auswahl der Menge GRP eine oder mehrere Iterationen i mit i=1,...,I und 1≤I≤VP, umfasst, wobei in jeder Iteration i
- in einem Zuordnungsschritt ZU(i) eine Anzahl NTGRP(i) von Teilgruppen TGRP(i,t) mit t=1,...,NTGRP(i) erzeugt wird, jeweils umfassend eine oder mehrere Projektionen aus der ursprünglichen Grundmenge GRD(0), indem einer jeweiligen Teilgruppe TGRP(i,t) eine Anzahl N(i) von Projektionen aus der ursprünglichen Grundmenge GRD(0) zugeordnet wird,
- für jede der Teilgruppen TGRP(i,t) der Qualitätsindex Q(TGRP(i,t)) bestimmt wird und
- aus den Teilgruppen TGRP(i,t) diejenige Teilgruppe TGRP(i,t=opt) ausgewählt wird, für die der Qualitätsindex Q(TGRP(i,t=opt)) optimal ist, insbesondere maximal,
und wobei die Projektionen der in der letzten Iteration i=I ausgewählten Teilgruppe TGRP(i=I,t=opt) der Menge GRP zugeordnet werden.

5. Verfahren nach Anspruch 4, **dadurch gekennzeichnet, dass** in jeder Iteration i in einer ersten Qualitätsbewertung QUAL1(i) jeder Teilgruppe TGRP(i,t) ein Fourier-Qualitätsindex QF(TGRP(i,t)) zugeordnet wird und/oder in einer zweiten Qualitätsbewertung QUAL2(i) für jede Teilgruppe TGRP(i,t) ein Bildqualitätsindex QB(TGRP(i,t)) berechnet wird, wobei der Qualitätsindex Q(TGRP(i,t)) einer jeweiligen Teilgruppe TGRP(i,t) abhängig von dem Bildqualitätsindex QB(TGRP(i,t)) und/oder dem Fourier-Qualitätsindex QF(TGRP(i,t)) ist, wobei der Qualitätsindex Q(TGRP(i,t)) jeweils insbesondere durch Multiplikation des Bildqualitätsindex QB(TGRP(i,t)) und des Fourier-Qualitätsindex QF(TGRP(i,t)) gebildet wird.

6. Verfahren nach einem der Ansprüche 4 bis 5, **dadurch gekennzeichnet, dass** im Zuordnungsschritt ZU(i) die Zuordnung von Projektionen aus der ursprünglichen Grundmenge GRD(0) zu einer jeweiligen Teilgruppe TGRP(i,t) in einer jeweiligen Iteration i derart erfolgt, dass
- für i=1 eine jede Teilgruppe TGRP(1,t) jeweils eine der Projektionen der ursprünglichen Grundmenge GRD(0) umfasst, wobei unterschiedliche Teilgruppen unterschiedliche Projektionen der ursprünglichen Grundmenge GRD(0) umfassen,
- in jeder weiteren Iteration i mit i>1 eine jeweilige Teilgruppe TGRP(i,t) die Projektionen der im vorherigen Schritt i-1 ausgewählten Teilgruppe TGRP(i-1,t=opt) und zusätzlich jeweils eine der Projektionen einer jeweiligen reduzierten Grundmenge GRD(i) von Projektionen umfasst, wobei unterschiedliche Teilgruppen TGRP(i,t1), TGRP(i,t2) unterschiedliche Projektionen der reduzierten Grundmenge GRD(i-1) umfassen,
wobei sich für eine jeweilige Iteration i die dort verwendete reduzierte Grundmenge GRD(i) von der ursprünglichen Grundmenge GRD(0) dadurch unterscheidet, dass die reduzierte Grundmenge GRD(i) die Projektionen der in der vorhergehenden Iteration i-1 ausgewählten Teilgruppe TGRP(i-1,t=opt) nicht enthält.

7. Verfahren nach einem der Ansprüche 5 bis 6, **dadurch gekennzeichnet, dass** der in der ersten Qualitätsbewertung QUAL1(i) einer jeweiligen Teilgruppe TRGP(i,t) zugeordnete Fourier-Qualitätsindex QF(TRGP(i,t)) zumindest einem Fourier-Qualitätsindex QF(px) entspricht, welcher zumindest einer der Projektionen P(px) der jeweiligen Teilgruppe TRGP(i,t) zugeordnet ist.

8. Verfahren nach Anspruch 7, **dadurch gekennzeichnet, dass** einer jeweiligen Teilgruppe TRGP(i,t) derjenige Fourier-Qualitätsindex QF(TRGP(i,t))=QF(P(px)) zugeordnet wird, der derjenigen Projektion P(px) zugeordnet ist, die dieser Teilgruppe TGRP(i,t) aus der jeweiligen reduzierten Grundmenge GRD(i) zuletzt hinzugefügt wurde.

9. Verfahren nach einem der Ansprüche 5 bis 6, **dadurch gekennzeichnet, dass** der Fourier-Qualitätsindex QF(p) einer jeweiligen Projektion P(p) einer Datenbasis FGMAP entnommen wird, welche, insbesondere vor der Ausführung des Bewertungsschrittes S_BEW, erzeugt wird, indem
- anhand der Vielzahl von Projektionen P(p) der ursprünglichen Grundmenge GRD(0) ein mehrdimensionaler Fourier-Datensatz im Fourierraum generiert wird,
- für jede der Projektionen P(p) der ursprünglichen Grundmenge GRD(0) entlang einer Richtung der jeweiligen Projektion P(p) entsprechenden Richtung im Fourier-Datensatz die dortigen Werte, insbesondere die Fourierkoeffizienten, zu einem jeweiligen Fourier-Gesamtwert FG(p) aufaddiert werden, wobei
- ein jeweiliger so ermittelter Fourier-Gesamtwert FG(p) den Fourier-Qualitätsindex QF(p)=FG(p) dieser Projektion P(p) repräsentiert und dieser Projektion P(p) zugeordnet wird.

10. Verfahren nach Anspruch 9, **dadurch gekennzeichnet, dass** in der Iteration i die Fourier-Qualitätsindizes QF(p') von Projektionen P(p'), welche benachbart zu derjenigen Projektion P(pi) liegen, die in dieser Iteration i der Teilgruppe TGRP(i,t) zugeordnet wurde, mit einem Wichtungsfaktor W<1 multipliziert werden.

11. Verfahren nach einem der Ansprüche 5 bis 10, **dadurch gekennzeichnet, dass** in der zweiten Qualitätsbewertung QUAL2(i) zur Berechnung des jeweiligen Bildqualitätsindex QB(TRGP(i,t)) für eine jeweilige Teilgruppe TRGP(i,t)
- aus den Projektionen dieser Teilgruppe TGRP(i,t) ein Bild B(i,t) rekonstruiert wird und
- für das jeweilige rekonstruierte Bild B(i,t) eine Qualitätsmetrik bestimmt wird, die dann den Bildqualitätsindex QB(TGRP(i,t)) für die jeweilige Teilgruppe TGRP(i,t) repräsentiert.

12. Verfahren nach einem der Ansprüche 1 bis 11, **dadurch gekennzeichnet, dass** die Projektionen der Grundmenge GRD(0) simulierte Projektionen von einem das zu untersuchende Objekt repräsentierenden simulierten Gegenstand sind.

13. Verfahren nach einem der Ansprüche 1 bis 12, **dadurch gekennzeichnet, dass** der Abbildungsbereich nicht das ganze Objekt OBJ umfasst, sondern einen Teilbereich OBJ AUS des Objekts OBJ, in dem sich eine bestimmte Struktur des Objekts OBJ befindet.

14. CT-System (100) zur Untersuchung eines Objekts OBJ umfassend ein Quelle-Detektor-System (110, 120) und eine Steuereinheit (130), wobei
- das Quelle-Detektor-System (110, 120) ausgebildet ist, aus einer Vielzahl NPOS von Positionen POS(a) Aufnahmen AUF(b) des zu untersuchenden Objekts OBJ zu erzeugen,
- die Steuereinheit (130) eingerichtet ist, das Verfahren nach einem der Ansprüche 1 bis 13 auszuführen, um die Vielzahl NPOS von Messpositionen POS(a) zur Untersuchung des Objekts OBJ zu bestimmen.
